(19) Europäisches Patentamt
European Patent Office
Office européen des brevets

(11) Veröffentlichungsnummer: **0 019 577**
**B1**

(12) # EUROPÄISCHE PATENTSCHRIFT

(45) Veröffentlichungstag der Patentschrift: **09.02.83**

(51) Int. Cl.³: **C 09 B 67/34**, C 09 B 69/02

(21) Anmeldenummer: **80810108.3**

(22) Anmeldetag: **01.04.80**

(54) **Hochkonzentrierte Farbstofflösungen, deren Herstellung und Verwendung und daraus hergestellte Farbstoffpräparate.**

(30) Priorität: **09.04.79 CH 3363/79**

(43) Veröffentlichungstag der Anmeldung: **26.11.80 Patentblatt 80/24**

(45) Bekanntmachung des Hinweises auf die Patenterteilung: **09.02.83 Patentblatt 83/6**

(84) Benannte Vertragsstaaten: **CH DE FR GB LI**

(56) Entgegenhaltungen:
**DE-A-2 816 983**
**DE-B-1 619 573**
**DE-B-2 001 816**

(73) Patentinhaber: **CIBA-GEIGY AG, Patentabteilung Postfach, CH-4002 Basel (CH)**

(72) Erfinder: **Nicopoulos, Alex, Drahtzugstrasse 57, CH-4057 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 019 577 B1

BUNDESDRUCKEREI BERLIN

# Hochkonzentrierte Farbstofflösungen, deren Herstellung und Verwendung und daraus hergestellte Farbstoffpräparate

Die vorliegende Erfindung betrifft ein Verfahren zur Herstellung von hochkonzentrierten Farbstofflösungen kationischer Farbstoffe, die dadurch erhaltenen Farbstofflösungen sowie deren Verwendung zur Herstellung von festen Farbstoffpräparaten oder lagerstabilen, flüssigen Farbstoffpräparaten.

Es ist bekannt, kationische Farbstoffe aus dem wäßrigen (bzw. organisch oder organisch/wäßrigen) Synthesegemisch durch Zusatz von festen oder gelösten Salzen z. B. NaCl und $ZnCl_2$ auszusalzen bzw. durch Umwandlung in weniger lösliche Salze auszufällen. Dadurch wird der Farbstoff als unlösliches bzw. schwerlösliches Salz fest ausgeschieden, durch Filtration abgetrennt und anschließend getrocknet. Das isolierte Farbstoffsalz liegt z. B. als Sulfat, Methylsulfat, Chlorid oder vor allem als Zinkchloridsalz vor. Das so erhaltene trockene Farbstoffpulver weist meist einen relativ hohen Anteil an fremdem Salz auf.

Da Farbstoffpulver bekanntlich die unangenehme Eigenschaft besitzen zu stäuben, hat man auch bereits versucht, sie in Form konzentrierter Flüssigkeitsformulierungen zu verwenden. Zu diesem Zweck wurden verschiedene Vorschläge gemacht, die jedoch mit Problemen technischer und ökologischer Art behaftet sind. Die nach den bisher üblichen Verfahren erhaltenen Farbstofflösungen weisen den Nachteil auf entweder sehr arbeitsaufwendig zu sein oder dann zu große Anteile an unerwünschten anorganischen Salzen zu enthalten.

Zur Herstellung flüssiger Farbstoffpräparate geht man vielfach vom festen Farbstoff aus und überführt diesen, unter Verwendung von Hilfsmitteln und einem geeigneten Lösungsmittel, in eine flüssige Formulierung. Derart hergestellte Farbstoffpräparate werden z. B. in der DE-B-1 619 573 beschrieben. Kationische Farbsalze in Form des feuchten Farbstoffpreßkuchens werden zusammen mit einem Salz, wie z. B. Natriumchlorid, einer Säure und einem kationischen oder nichtionogenen Stabilisator in Wasser eingetragen und homogenisiert. Man erhält so ein konzentriertes flüssiges Farbstoffpräparat.

Ferner ist aus der DE-A-2 816 983 ein Verfahren zur Herstellung hochkonzentrierter, lagerstabiler Farbstofflösungen von Säurefarbstoffen bekannt. Verfahrenswesentlich ist hier eine Flüssig-Flüssig-Extraktion, mit deren Hilfe der Farbstoff im System Wasser/organisches Lösungsmittel, welches mit Wasser unbeschränkt mischbar ist, gegebenenfalls in Gegenwart von Salz, selektiv in der organischen Phase angereichert wird. Die Farbstofflösungsmittel-Phase kann nach Abtrennen der fast farblosen wäßrigen Phase direkt als konzentriertes, lagerstabiles Farbstoffpräparat verwendet werden.

Gemäß der DE-B-2 001 816 werden konzentrierte Farbstofflösungen kationischer Farbstoffe hergestellt, indem man den in Wasser oder einem Gemisch aus Wasser und organischem Lösungsmittel, in der Hitze gelösten Farbstoff mit einem Salz umsetzt und so durch Anionenaustausch in ein leichtlösliches Salz überführt. Lösungen dieser Farbsalze sind lagerstabil und eignen sich direkt zum Färben von Polyacrylnitrilfasern.

Es wurde nun gefunden, daß man überraschenderweise sehr hochkonzentrierte, salzarme Farbstofflösungen von kationischen Farbstoffen erhält, indem man den Farbstoff in verdünnter Lösung bzw. Emulsion, wie er aus der Synthese erhalten wird, durch Bildung eines 2-Flüssigphasensystems und Abtrennung der farbstoffenthaltenden Phase isoliert (Flüssig-Flüssig-Extraktion). Die nach diesem Verfahren erhaltenen Farbstoffe weisen eine höhere Reinheit auf als die nach den bisher bekannten Methoden erhaltenen Farbstoffe.

Gegenstand der vorliegenden Erfindung ist somit ein Verfahren zur Herstellung hochkonzentrierter, wäßriger Lösungen von kationischen Farbstoffen, die sich zur Herstellung von konzentrierten, lagerstabilen flüssigen oder festen Farbstoffpräparaten weiterverarbeiten lassen, welches dadurch gekennzeichnet ist, daß man eine verdünnte wäßrige Lösung bzw. Emulsion des kationischen Farbsalzes bei 10 bis 95°C mit soviel mindestens eines Elektrolytes versetzt, daß sich ein 2-Phasensystem aus 2 Flüssigphasen bildet, und die abgeschiedene hochkonzentrierte wäßrige Farbstofflösung abtrennt.

Da die abgeschiedene wäßrige, hochkonzentrierte Farbstofflösung meist leichter als die wäßrige, wenig Farbstoff enthaltende Salzlösung ist, kann man sie isolieren, indem man die schwere Phase einfach nach unten ablaufen läßt. Im umgekehrten Falle wird die schwerere, den Farbstoff enthaltende Phase durch Ablaufenlassen isoliert.

Durch das erfindungsgemäße Verfahren ist es möglich die Konzentration des Farbstoffes, wie sie aus der Synthese erhalten wird, beispielsweise auf das 3- bis 8fache, bezogen auf das Gewicht, zu erhöhen.

Die erfindungsgemäß erhaltenen Farbstofflösungen enthalten außer Farbstoff und Wasser nur geringe Mengen anorganischer Salze, höchstens 15 Gewichtsprozent und normalerweise weniger als 10 Gewichtsprozent, bezogen auf die Farbstofflösung.

Bevorzugte hochkonzentrierte Farbstofflösungen gemäß vorliegender Erfindung enthalten

(a) 30 bis 90 Gewichtsprozent, vorteilhaft 50 bis 80 Gewichtsprozent eines oder mehrere Salze eines kationischen Farbstoffes,

(b) 55 bis 8 Gewichtsprozent, vorteilhaft 45 bis 15 Gewichtsprozent Wasser und
(c) 1 bis 15 Gewichtsprozent, vorteilhaft 2 bis 8 Gewichtsprozent mindestens eines anorganischen Salzes bzw. einer anorganischen Base.

Die gemäß vorliegender Erfindung erhaltene hochkonzentrierte Farbstofflösungen eignen sich zur Herstellung von festen und flüssigen Farbstoffpräparaten.

Dank der hohen Farbstoffkonzentration ist es sehr leicht möglich, den Farbstoff durch einfaches Trocknen zu isolieren, um einen Rohfarbstoff zu erhalten, der wesentlich weniger Gehalt an anorganischem Salz aufweist als Farbstoffe, die nach herkömmlichen Methoden erhalten werden. Dank der hohen Farbstoffkonzentration spart man außerdem Energie beim Trocknen. Zur Herstellung von festen Farbstoffpräparaten wird der Rohfarbstoff nach üblicher Art und Weise unter Zusatz von den üblichen Hilfsmitteln wie z. B. Staubbindemittel, Stellmittel und/oder Dispergiermittel weiterverarbeitet. Die Zusätze können jedoch auch vor dem Trocknen der Farbstofflösung zugegeben werden.

Da die gemäß vorliegender Erfindung erhaltene hochkonzentrierte Farbstofflösungen relativ salzarm sind, eignen sie sich vorzüglich auch zur Herstellung von flüssigen Farbstoffpräparaten. Die Farbstofflösung wird nach bekannter Art und Weise gegebenenfalls mit Wasser und/oder organischem Lösungsmittel auf einfache Art auf die gewünschte Farbstärke verdünnt. Als organische Lösungsmittel kann man vorteilhaft mit Wasser in jedem Verhältnis mischbare Lösungsmittel, wie z. B. ein- und mehrwertige Alkohole wie Glykole und Glykolderivate und vor allem organische Säuren wie niederaliphatische Carbonsäuren, insbesondere Essigsäure verwenden. Auch weitere in flüssigen Farbstoffpräparaten übliche Zusätze wie Amine, z. B. Alkanolamine und Alkylamine sowie Emulgatoren werden vorteilhaft den flüssigen Farbstoffpräparaten zugegeben. Auf diese Weise erhält man dünnflüssige, lagerstabile flüssige Farbstoffpräparate, die sich mit anderen ähnlichen Präparaten von anderen kationischen Farbstoffen vertragen, ohne daß Ausfällungen auftreten, so daß man zur Erhaltung von sogenannten »Premixes« 2 oder mehrere Farbstoffe schon im voraus mischen kann.

Ein weiterer Vorteil der erfindungsgemäßen hochkonzentrierten Farbstofflösungen ist, daß dank ihrer hohen Konzentration, Umsetzungsreaktionen durch Ionenaustausch sich durchführen lassen, die aus verdünnter Lösung nicht möglich sind. Man muß den Farbstoff nicht vorher isolieren. Auf diese Weise ist es beispielsweise möglich das Farbstoffchlorid ohne Verwendung von Zinkchlorid, also zinkfrei zu erhalten, was ökologisch vorteilhaft ist. Aus dem gewonnenen Farbstoffchlorid kann man dann wiederum, ohne die Farbstoffbase herstellen zu müssen, das Farbstoffacetat z. B. nach dem Verfahren gemäß DE-OS 2 549 436 herstellen.

Als Farbstoffe kommen für das erfindungsgemäße Verfahren kationische Farbstoffe, die mindestens ein quaternäres Stickstoffatom aufweisen in Frage. Sie liegen meist in Form eines Salzes mit einer anorganischen oder organischen Säure vor, wie man sie direkt aus der Synthese erhält.

Diese Farbsalze sind bekannt und können nach bekannten Methoden hergestellt werden. Es handelt sich dabei chemisch um Farbstoffe, die ein farbiges Kation und ein farbloses Anion enthalten. Sie gehören den verschiedensten chemischen Klassen an; beispielsweise handelt es sich um Sulfate, Chloride, Acetate oder vor allem um Methylsulfate von Azofarbstoffen, wie Monoazo-, Disazo- und Polyazofarbstoffen, von Anthrachinonfarbstoffen, Phthalocyaninfarbstoffen, von Diphenylmethan- und Triarylmethanfarbstoffen, von Methin-, Polymethin-, Azomethin- und Azacyaninfarbstoffen, von Thiazol-, Ketonimin-, Acridin-, Cyanin-, Nitro-, Chinolin-, Benzimidazol-, Xanthen-, Azin-, Oxazin- und Thiazinfarbstoffe. Bevorzugte kationische Farbstoffe sind solche, die das quaternäre Stickstoffatom im heterocyclischen Ring enthalten, es können aber auch kationische Farbstoffe verwendet werden, die das quaternäre Stickstoffatom an einer Alkylkette enthalten.

Erfindungsgemäß verwendbare geeignete Elektrolyte sind Alkalihydroxide oder Alkali-, Erdalkali- oder Ammoniumsalze von anorganischen Säuren mit einer Löslichkeit in Wasser von mindestens 5 g/l bei 20°C. Dabei handelt es sich z. B. um Alkalihydroxide wie Kaliumhydroxid vorzugsweise Natriumhydroxid, Alkalisalze wie Kaliumchlorid, Natriumchlorid, Natriumcarbonat und vor allem Natriumsulfat, sowie um Ammoniumsalze wie z. B. Ammoniumchlorid oder -sulfat.

Das erfindungsgemäße Verfahren wird wie oben angegeben bei einer Temperatur von 10 bis 95°C durchgeführt, wobei im allgemeinen je nach verwendetem Farbstoff diese zwischen 30° und 70°C und vorteilhaft zwischen 40 und 60°C liegt. Die Temperatur wird zweckmäßig so gewählt, daß der kationische Farbstoff in einem 2 Flüssigphasensystem in gelöster oder öliger Form vorliegt. Die Menge des verwendeten Elektrolyts hängt von verschiedenen Faktoren ab, wie z. B. den physikalischen Eigenschaften des Farbstoffes, wie der Löslichkeit des Farbsalzes, Schmelzpunkt etc. sowie der Konzentration der Ausgangslösung bzw. -emulsion. Der Elektrolyt wird vorzugsweise in fester Form zugegeben. Durch Vorversuche kann auf einfache Art und Weise die Menge ermittelt werden, die zur 2-Phasentrennung erforderlich ist. Man muß auf die Temperatur achten, da ein Herabsetzen der Temperatur zur Kristallbildung führen kann.

Obwohl der pH-Wert der Ausgangslösung bzw. -emulsion für das erfindungsgemäße Verfahren nicht Bedingung ist, liegt er bei den meisten Synthesegemischen im sauren Bereich, z. B. zwischen 1 und 6.

Die nach der Abtrennung der erfindungsgemäßen hochkonzentrierten Farbstofflösung verbleibende

Phase enthält außer anorganischen Salzen und anderen aus der Synthese zurückgebliebenen Verunreinigungen nur unwesentliche Mengen Farbstoff, die sich leicht, z. B. mit ein wenig Hydrosulfit entfärben lassen.

In den nachfolgenden Beispielen sind Teile in Gewichtsteilen, Prozente in Gewichtsprozenten und Temperaturen in Celsiusgraden angegeben.

Beispiel 1

a) 60 g 3-Amino-1,2,4-triazol werden in üblicher Art und Weise diazotiert und mit 110 g N,N-Diäthylanilin gekuppelt. Das Reaktionsprodukt wird in einer Nutsche filtriert.

b) Der unter (a) erhaltene feuchte Nutschkuchen wird durch Zugabe von Wasser auf ein Gesamtvolumen von 500 ml gestellt. Bei 15 bis 20° C läßt man 13,3 g Dimethylsulfat innerhalb ca. 10 Minuten zulaufen und wartet bis der pH-Wert ins saure Gebiet absinkt. Sobald pH 4 erreicht wird, gibt man ca. 8 ml Natriumhydroxid-Lösung (17%ig) zu bis pH 6,5 erreicht ist. Nun läßt man 205,7 g Dimethylsulfat innerhalb 2—3 Stunden zufließen. Dabei wird der pH-Wert mit weiteren ca. 300 ml 17%iger Natriumhydroxid-Lösung bei pH 6,5 und die Temperatur der exothermen Reaktion mit insgesamt ca. 500 g Eis bei 25—30° C gehalten.

Nach beendeter Zugabe des Dimethylsulfats wird 30 Minuten nachgerührt bei pH 6,0—7,5, wobei man die Temperatur auf 40—45° C ansteigen läßt. Hierauf wird der pH-Wert mit wenig Salzsäure (38%ig) auf pH 1,5—2,0 gestellt. Das Endvolumen beträgt ca. 1300 ml.

c) In einem Scheidetrichter mit Doppelmantel werden 550 ml (= ca. 550 g) der wäßrigen Farbstofflösung erhalten aus der Synthese (nach b), enthaltend ca. 71 g (= ca. 13%) des Farbstoffes der Formel

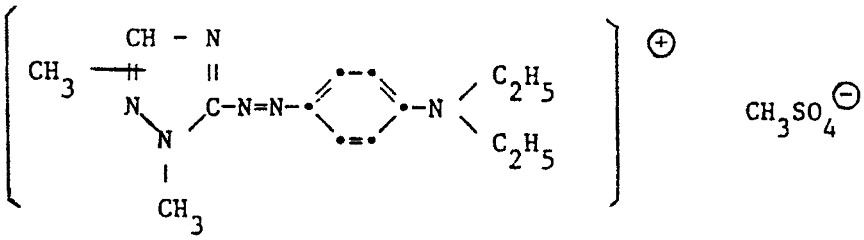

welche einen pH-Wert von ca. 1,5 bis 2,0 aufweist, indirekt mit heißem Wasser auf 50° C aufgeheizt und innerhalb 20 Minuten portionsweise mit 132 g wasserfreiem Natriumsulfat versetzt und während weiterer 30 Minuten gerührt. Anschließend wird das Gemisch während 1 bis 2 Stunden bis zur Phasentrennung stehen gelassen.

Als leichte Phase scheidet sich eine dunkle, konzentrierte Farbstofflösung ab. Die schwere wäßrige Phase enthält eine unwesentliche Menge Farbstoff. Diese Phase wird via Untenauslauf abgetrennt. Sie läßt sich gut mit wenig Hydrosulfit entfärben.

Die Farbstoffphase enthält ca. 38% des Farbstoffsalzes obiger Konstitution als Methylsulfatsalz und ca. 14% als Sulfatsalz, ca. 36% Wasser und ca. 12% anorganisches Salz (vorwiegend $Na_2SO_4$). Das bedeutet einen etwa 4mal so hohen Farbstoffgehalt wie in der eingesetzten aus der Synthese erhaltenen Farbstofflösung.

d) Die unter (c) erhaltene konzentrierte Farbstofflösung (135 g) wird mit 18,9 g Eisessig versetzt und auf Raumtemperatur gekühlt. Durch Zugabe von ca. 2,5 g Äthanolamin stellt man den pH-Wert auf 4,0—4,3 und anschließend mit ca. 33 g Wasser das Endgewicht der Lösung auf 189 g ein. Schließlich wird die Lösung mit 1 g Clarcel® versetzt und durch eine Nutsche geklärt. Man erhält eine direkt gebrauchsfertige, lagerstabile Farbstofflösung, die sich auch gut zur Herstellung von Premixes mit anderen kationischen Farbstoffen eignet.

Beispiel 2

a) In einem Scheidetrichter mit Doppelmantel werden 600 g der wäßrigen Lösung, erhalten aus der Synthese, enthaltend ca. 55,5 g (= ca. 9,2%) des Farbstoffes der Formel

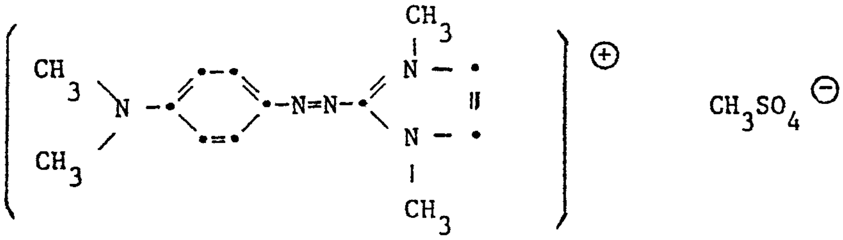

welche einen pH-Wert von 4,0—5,0 aufweist, indirekt mit heißem Wasser auf 48—50°C aufgeheizt, mit 150 g wasserfreiem Natriumsulfat versetzt und während 30 Minuten gerührt.

Anschließend wird der Rührer entfernt und das Gemisch während 2 Stunden bei 48—50°C zur Phasentrennung stehen gelassen. Als leichte Phase scheidet sich eine dunkle, konzentrierte Farbstofflösung ab. Die schwere wäßrige Phase (550 ml) enthält eine unwesentliche Menge Farbstoff. Diese schwere Phase wird via Untenauslauf abgetrennt. Sie läßt sich gut mit wenig Hydrosulfit entfärben.

Die Farbstoffphase (ca. 95 g) enthält ca. 58% des obigen Farbstoffsalzes als Methylsulfat, ca. 36% Wasser und ca. 6% anorganisches Salz (vorwiegend $Na_2SO_4$). Das bedeutet einen mehr als 6mal so hohen Farbstoffgehalt wie in der eingesetzten aus der Synthese erhaltenen Farbstofflösung.

b) Die unter (a) erhaltene konzentrierte Farbstofflösung (95 g) wird mit warmem Wasser bis zum ursprünglichen Volumen von 600 ml verdünnt. Man stellt anschließend die Temperatur der Lösung auf 50—55°C und den pH-Wert auf 4,0—4,5 (evtl. Korrektur nach unten mit wenig konzentrierter Salzsäure). Diese Lösung wird nun mit 17,5 ml einer wäßrigen Lösung, enthaltend 13,6 g Zinkchlorid, und dann mit 60,0 g technischem Natriumchlorid versetzt. Anschließend wird die Suspension auf 15—20°C gekühlt und das abgeschiedene Farbsalz durch eine Nutsche filtriert. Das Nutschgut wird im Vakuum-Trockenschrank bei 70°C getrocknet. Man erhält 71—72 g des trockenen Rohfarbstoffes als Zinkchloriddoppelsalz, mit einer höheren Reinheit als das Zinksalz, daß man direkt aus der Syntheselösung erhalten kann.

c) Die unter (a) erhaltene konzentrierte Farbstofflösung (80 ml bzw. 95 g) wird mit Wasser und Eis auf ein Volumen von 400 ml gestellt, so daß die Temperatur 15° beträgt. Anschließend gibt man 100 g Kaliumchlorid portionsweise zu. Der Farbstoff fällt allmählich kristallin aus (Temperatur=7°C). Der durch Filtration isolierte Farbstoff wird getrocknet und durch übliche Aufarbeitung (Mahlen und mit Coupage Mischen) zu einem trockenen pulverförmigen Farbstoffpräparat, das frei von Zink ist, weiterverarbeitet.

d) Die unter (a) erhaltene, konzentrierte Farbstofflösung (80 ml bzw. 95 g) wird gemäß Beispiel 1 (d) mit Eisessig, Wasser und sofern ein höherer pH-Wert erwünscht ist, Äthanolamin bis zu einem gewünschten Endgewicht versetzt. Man erhält auf diese Weise eine konzentrierte direkt gebrauchsfertige, lagerstabile flüssige Formulierung.

e) Zur Herstellung einer flüssigen Formulierung des Farbstoffes als Acetat eignet sich der nach (c) erhaltene, getrocknete Rohfarbstoff der vorwiegend als Chlorid vorliegt, indem man es z. B. als Ausgangsprodukt in dem Verfahren gemäß der DE-A-2 549 436 einsetzt.

## Beispiel 3

a) 330 g der wäßrigen Emulsion aus der Synthese des Farbstoffes erhalten, enthaltend ca. 80,2 g (=ca. 24%) des Farbstoffsalzes der Formel

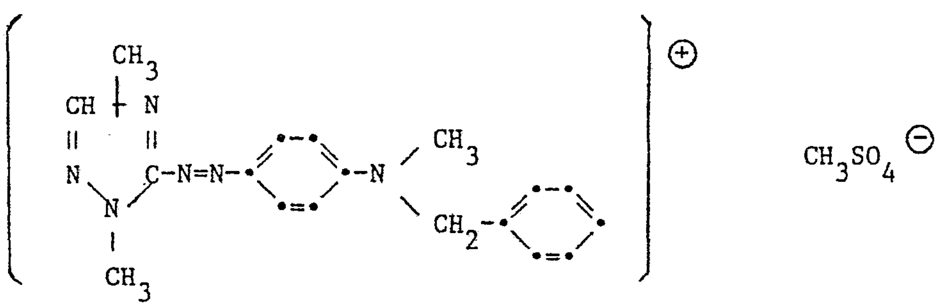

werden auf eine Temperatur von ca. 50—55°C gestellt. Der pH-Wert des Gemisches beträgt ca. 1,0. Die Lösung wird nun mit 60 g wasserfreiem Natriumsulfat portionsweise innerhalb 20 Minuten versetzt und noch ca. 30 Minuten bei einer Temperatur von 50—55°C gerührt.

Das Gemisch wird während 1 bis 2 Stunden bei 50—55°C zur Schichtentrennung stehen gelassen. Als leichte Phase scheidet sich eine dunkle, konzentrierte Farbstofflösung ab (ca. 100 g). Die schwere wäßrige Phase (ca. 260 ml) enthält eine unwesentliche Menge Farbstoff. Diese schwere Phase wird via Untenauslauf abgetrennt. Sie läßt sich gut mit wenig Hydrosulfit entfärben.

Die Farbstoffphase enthält ca. 80% des obigen Farbstoffsalzes, ca. 17% Wasser und ca. 3% anorganisches Salz (vorwiegend $Na_2SO_4$). Das bedeutet einen etwa 3,5mal so hohen Farbstoffgehalt wie in der eingesetzten aus der Synthese erhaltenen Farbstoffemulsion.

b) Die unter (a) erhaltene konzentrierte Farbstofflösung (ca. 100 g bzw. ca. 81 ml) wird mit 66 g Eisessig versetzt und auf Raumtemperatur gekühlt. Durch Zugabe von ca. 1 g Äthanolamin stellt man den pH-Wert auf 2,0. Anschließend wird die Lösung mit ca. 50 g Wasser verdünnt, mit 1 g Hyflo versetzt und durch eine Nutsche geklärt.

Schließlich gibt man noch 2,65 g eines Emulgators zu. Das Endgewicht beträgt 220 g. Man erhält

eine lagerstabile Farbstofflösung, die sich auch gut zur Herstellung von Premixes mit anderen kationischen Farbstoffen eignet.

Beispiel 4

a) 4-Pyridinaldehyd-phenylhydrazon, hergestellt aus 30 g Phenylhydrazin und 300 g 4-Pyridinaldehyd, wird mit 600 g Wasser und 372 g Dimethylsulfat verrührt und auf 0—5°C gekühlt. Man gibt nun 440 ml einer 30%igen wäßrigen Natriumhydroxidlösung während 2 bis 3 Stunden bei maximal 30°C zu, wodurch sich ein pH-Wert von 5—7 einstellt.

b) Man gibt dem gemäß (a) erhaltenen Reaktionsgemisch 900 g Eis und 531 g Dimethylsulfat bei maximal 26°C und anschließend 450 ml einer 30%igen Natriumhydroxidlösung zu. Anschließend läßt man bis zur Beendigung der Reaktion stehen. Dann gibt man 10 g wasserfreies Natriumcarbonat zu und wärmt das Reaktionsgemisch auf 60°C. Das Gemisch wird eine Stunde bei 55—60°C und einem pH-Wert von mindestens 7,5 gehalten. Durch langsame Zugabe von 60%iger Schwefelsäure wird nun der pH-Wert auf 6,0—7,0 eingestellt.

c) Dem gemäß (b) erhaltenen Reaktionsgemisch (ca. 5000 ml, enthaltend ca. 16,5% Farbstoff) werden ca. 500 g wasserfreies Natriumsulfat zugegeben und das Gemisch eine Stunde bei ca. 45—55°C und bei einem pH-Wert von 6,0—7,0 gerührt. Der Rührer wird dann abgestellt und das Gemisch 1 bis 2 Stunden bei 45—55°C stehengelassen, wobei es sich in Schichten trennt. Dabei darf die Temperatur nicht unter 40°C absinken, da sonst der Farbstoff kristallin ausfällt. Als leichte Phase scheidet sich eine dunkle konzentrierte, ölige Farbstofflösung ab (ca. 1500 g, enthaltend ca. 55% Farbstoff, was einen etwa 3,3mal so hohen Farbstoffgehalt wie in dem eingesetzten aus der Synthese erhaltenen Reaktionsgemisch bedeutet). Die schwere Phase wird via Untenauslauf abgetrennt.

d) Die obere Farbstoffschicht (ca. 1500 g) und die eventuell vorhandene Zwischenschicht (Farbstofflösung mit wenig Ablauge) werden nach üblichen Methoden im Vakuumtrockenschrank getrocknet um den trockenen Rohfarbstoff der Formel

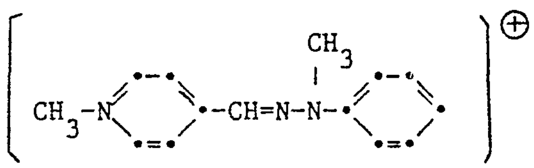 $X^{\ominus}$

worin $X^{\ominus}$ $CH_3SO_4^{\ominus}$ und $\frac{SO_4^{\ominus}}{2}$

ist, praktisch salzfrei zu erhalten.

e) Dem gemäß (b) erhaltenen Reaktionsgemisch (ca. 5000 ml, enthaltend ca. 16,5% Farbstoff) werden ca. 500 g wasserfreies Natriumchlorid zugegeben und das Gemisch eine Stunde bei ca. 50—55°C und bei einem pH-Wert von 6,0—7,0 gerührt. Der Rührer wird dann abgestellt und das Gemisch 1 bis 2 Stunden bei 50—55°C stehengelassen, wobei es sich in Schichten trennt. Dabei darf die Temperatur nicht unter 40°C absinken, da sonst der Farbstoff kristallin ausfällt. Als leichte Phase scheidet sich eine dunkle konzentrierte, ölige Farbstofflösung ab (ca. 2100 g, enthaltend ca. 40% Farbstoff, was einen etwa 2,4mal so hohen Farbstoffgehalt wie in dem eingesetzten aus der Synthese erhaltenen Reaktionsgemisch bedeutet). Die schwere Phase wird via Untenauslauf abgetrennt.

f) Die gemäß (e) erhaltene obere Farbstoffschicht (ca. 2100 g) und die eventuell vorhandene Zwischenschicht (Farbstofflösung mit wenig Ablauge) werden nach üblichen Methoden im Vakuumtrockenschrank getrocknet um den trockenen Rohfarbstoff der Formel

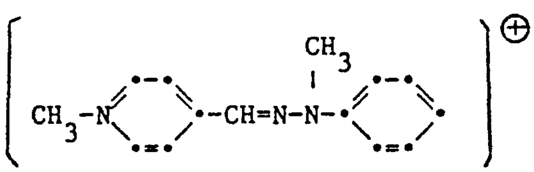 $X^{\ominus}$

worin $X^{\ominus}$ $CH_3SO_4^{\ominus}$ und $\frac{SO_4^{\ominus}}{2}$

ist, praktisch salzfrei zu erhalten.

g) Wenn man anstelle des im obigen Beispiel verwendeten Natriumsulfats bzw. Natriumchlorids eine entsprechende Menge Kaliumchlorid, Natriumcarbonat oder Natriumhydroxid verwendet und im übrigen gleich verfährt wie im Beispiel angegeben, so erhält man ebenfalls durch Phasentrennung eine hochkonzentrierte Farbstofflösung.

Beispiel 5

a) 3 kg der Lösung, erhalten aus der Synthese, enthaltend ca. 260 g des Farbstoffes der Formel

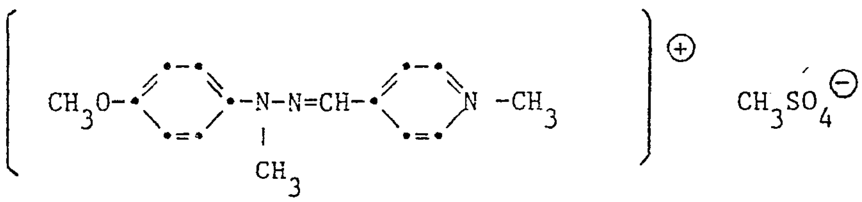

werden bei 55 bis 60°C mit 510 g wasserfreiem Natriumsulfat versetzt und 30 Minuten bei 55 bis 60°C gerührt. Die entstehende Emulsion gießt man in einen Scheidetrichter mit Doppelmantel, läßt ca. 30 Minuten bei 55 bis 60°C absitzen und trennt die schwere, wäßrige Phase (ca. 2700 ml) ab.

Die zurückbleibende ölige Farbstoffphase (leichte Phase — ca. 430 g = ca. 400 ml) besteht aus einer konzentrierten Farbstofflösung, enthaltend ca. 60% des obigen Farbstoffsalzes, 35% Wasser und ca. 5% anorganisches Salz (vorwiegend $Na_2SO_4$). Das bedeutet einen etwa 7mal so hohen Farbstoffgehalt wie in der eingesetzten aus der Synthese erhaltenen Farbstofflösung.

b) Die unter (a) erhaltene konzentrierte Farbstofflösung wird nach üblicher Methode im Vakuumtrockenschrank getrocknet um ein trockenes hochkonzentriertes salzarmes Farbstoffpulver zu erhalten.

c) Zu der nach (a) erhaltenen öligen Farbstofflösung gibt man 100 ml einer 30%igen Natriumhydroxid Lösung und 100 ml Wasser zu. Man schüttelt gut durch, läßt zur Schichtentrennung 30 Minuten stehen und läßt die schwere ölige Farbstoffphase (391 g bzw. 320 ml) in ein Becherglas abfließen. Die zurückbleibende wäßrige Phase (ca. 270 ml) wird abgetrennt. Dadurch wird der Farbstoff noch weiter aufkonzentriert. Der Gehalt an Farbstoff (ca. 66%) liegt ca. 8mal so hoch wie in der eingesetzten aus der Synthese erhaltenen Farbstofflösung.

d) Die unter (c) erhaltene konzentrierte, alkalische Farbstofflösung (391 g bzw. 320 ml) wird mit 400 ml Wasser verdünnt und der pH mit ca. 20 ml Eisessig auf 4,4 gebracht. Anschließend wird mit ca. 85 ml Wasser auf das Endgewicht von 900 g gestellt und über einen Papierfilter ohne Zusätze geklärt. Man erhält eine schwarzbraune, stabile dünnflüssige Lösung, die sich gut eignet zum Färben von Polyacrylnitrilfasern in gelben Farbtönen. Sie läßt sich auch mit ähnlichen Lösungen von anderen kationischen Farbstoffen in sogenannten Premixes verwenden.

Beispiel 6

a) 180 g der Lösung, erhalten aus der Synthese des Farbstoffes, enthaltend ca. 46,0 g (25,5%) des Farbstoffsalzes der Formel

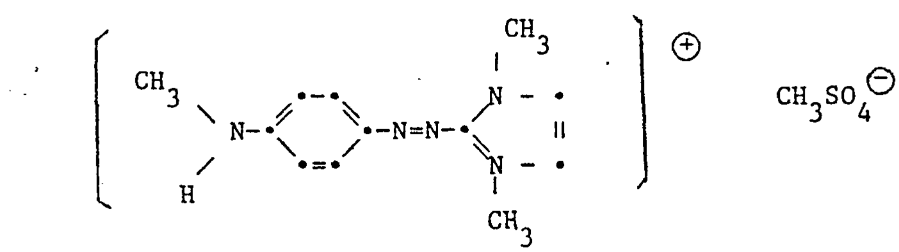

werden auf eine Temperatur von ca. 30—35°C eingestellt. Man stellt den pH-Wert der Lösung durch vorsichtige Zugabe von ca. 40 ml einer 30%igen Lösung von Natriumhydroxid auf 5,5 ein. Man kühlt dabei, so daß die Temperatur nicht über 50—55°C steigt. Der Farbstoff scheidet sich teilweise als ölige Phase aus. Zur vollkommenen Ausscheidung der farbstoffhaltigen Phase gibt man nun 5 g wasserfreies Natriumsulfat zu. Nach kurzer Rührzeit wird das Gemisch in einen Scheidetrichter umgefüllt und während ca. 30 Minuten stehen gelassen bei einer Temperatur von 50—55°C. Der Farbstoff scheidet als leichte ölige Phase aus (ca. 83 g, enthaltend ca. 55,4% Farbstoff). Die schwere Salzlösung enthaltende Phase (ca. 160 ml) wird via Untenauslauf abgetrennt.

b) Die unter (a) erhaltene konzentrierte Farbstofflösung (ca. 68 ml) wird gemäß Beispiel 1 (d) mit Eisessig, Wasser und, sofern ein höherer pH-Wert erwünscht ist, Äthanolamin bis zu einem

gewünschten Endgewicht versetzt. Man erhält auf diese Weise eine konzentrierte stabile flüssige Formulierung.

c) Die unter (a) erhaltene konzentrierte Farbstofflösung (ca. 68 ml) wird mit ca. 300 ml Wasser von Raumtemperatur verdünnt und in ein Becherglas umgefüllt. Das Volumen der Lösung wird mit Wasser und Eis auf 375 ml gestellt und der pH-Wert nötigenfalls mit wenig Salzsäure auf 5,5 korrigiert. Zur Fällung des Farbstoffes gibt man nun 103 g technisches Natriumchlorid zu. Nach kurzer Zeit entsteht eine rotbraune, dickflüssige Suspension, die noch ca. 2 Stunden gerührt wird. Der Farbstoff wird dann filtriert. Man erhält ca. 100 g eines feuchten Nutschkuchens. Nach Trocknen bei 70° C unter Vakuum erhält man 52 g eines zinkfreien Rohfarbstoffes der vorwiegend als Chlorid vorliegt. Der Rohfarbstoff wird mit Natriumsulfat und einem nicht ionogenen Dispergiermittel verschnitten und nach üblichen Verfahren gemahlen.

d) Zur Herstellung einer flüssigen Formulierung des Farbstoffes als Acetat eignet sich das nach (c) erhaltene Rohfarbstoff-Chlorid als Ausgangsprodukt in dem Verfahren gemäß der DE-OS 2 549 436.

## Beispiel 7

a) In einem Scheidetrichter mit Doppelmantel werden ca. 600 ml einer wäßrigen Lösung (pH 4,5), erhalten aus der Synthese, enthaltend ca. 107 g des Farbstoffsalzes der Formel

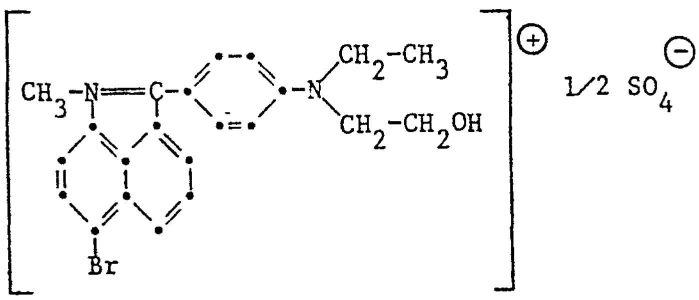

indirekt mit heißem Wasser auf 50—55° C aufgeheizt und innerhalb 30 Minuten portionsweise mit 120—150 g (20—25 Vol.-%) wasserfreiem Natriumsulfat versetzt und während weiterer 30 Minuten gerührt. Anschließend wird das Gemisch während 1—1½ Stunden zur Phasentrennung stehen gelassen.

Als schwere Phase scheidet sich ein konzentriertes Farbstofföl ab (=ca. 150 g, enthaltend 60—70% Farbstoffsalz als Sulfat, 30—40% Wasser und ca. 5% $Na_2SO_4$).

Die leichte Salzlösung-Phase beträgt 500—550 ml und enthält eine kleine Menge Farbstoff.

b) Ersetzt man das oben angegebene Farbstoffsalz durch eine äquivalente Menge (ca. 104 g) des Farbstoffsalzes der Formel

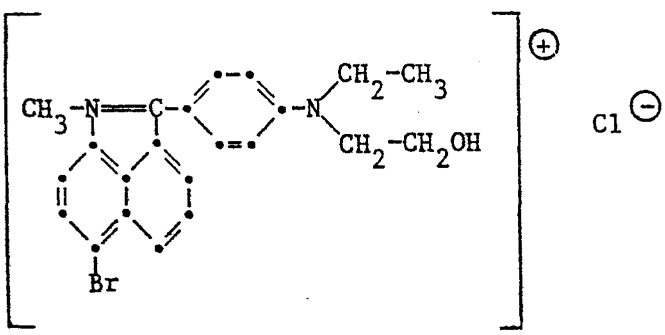

und verfährt im übrigen gleich wie im Beispiel angegeben, so erhält man ebenfalls durch Phasentrennung eine hochkonzentrierte Farbstofflösung, enthaltend ca. 60—70% Farbstoffsalz als Chlorid, 30—40% Wasser und ca. 5% $Na_2SO_4$.

c) Die unter (a) erhaltene Farbstoffphase wird gemäß Beispiel 1(d) mit Eisessig und Wasser bis zu einem gewünschten Endgewicht versetzt, um eine flüssige stabile Flüssigformulierung zu erhalten.

## Beispiel 8

a) In einem Schneidetrichter mit Doppelmantel werden 750 ml der wäßrigen Lösung, erhalten aus der Synthese, enthaltend ca. 75 g (=ca. 10%) des Farbstoffes der Formel

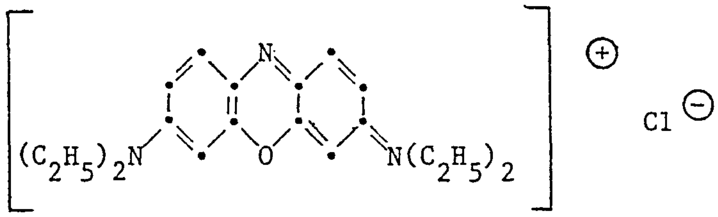

welche einen pH-Wert von 4,5–5,0 aufweist, indirekt mit heißem Wasser auf 55°C aufgeheizt, mit 187,5 g wasserfreiem Natriumsulfat versetzt und während 1¹/2 Stunden gerührt. Anschließend wird der Rührer entfernt und das Gemisch während 3–4 Stunden bei 55°C zur Phasentrennung stehen gelassen. Als leichte Phase scheidet sich eine dunkle, konzentrierte Farbstofflösung ab. Die schwere wäßrige Phase (ca. 700 ml) enthält eine unwesentliche Menge Farbstoff. Diese schwere Phase wird via Untenauslauf abgetrennt. Sie läßt sich gut mit wenig Hydrosulfit entfärben.

Die Farbstoffphase (ca. 139 g) enthält ca. 54% des obigen Farbstoffsalzes als Chlorid, ca. 43,5% Wasser und ca. 2,5% anorganisches Salz (vorwiegend $Na_2SO_4$). Das bedeutet einen mehr als 5mal so hohen Farbstoffgehalt wie in der eingesetzten aus der Synthese erhaltenen Farbstofflösung. Diese konzentrierte Farbstofflösung eignet sich zur Weiterverarbeitung in ein festes oder flüssiges hochkonzentriertes Farbstoffpräparat.

Beispiel 9

a) In einem Scheidetrichter mit Doppelmantel werden 1600 ml einer wäßrigen Lösung (pH ca. 5), erhalten aus der Synthese, enthaltend ca. 367 g des Farbstoffsalzes der Formel

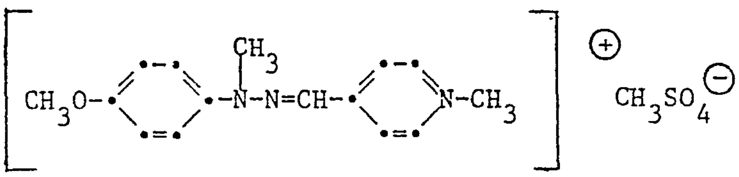

indirekt mit heißem Wasser auf 50–55°C aufgeheizt und innerhalb 30 Minuten portionsweise mit 400 g Natriumcarbonat calc. versetzt und während weiterer 30 Minuten gerührt. Anschließend wird das Gemisch während 30 Minuten zur Phasentrennung stehen gelassen.

Als leichte Phase scheidet sich ein dunkles, konzentriertes Farbstofföl ab (=ca. 630 g bzw. ca. 530 ml).

Die schwere Salz/Soda-Lösung beträgt ca. 1210 ml und enthält nur eine geringe Menge Farbstoff.

Die Farbstoffphase (630 g) enthält ca. 50% des Farbstoffsalzes (vorwiegend als Carbonat, der Rest als Methylsulfat), 40–45% Wasser und 5–10% Salz (vorwiegend Natriumcarbonat).

b) Ersetzt man das oben angegebene Farbstoffsalz durch eine äquivalente Menge (304 g) des Farbstoffsalzes der Formel

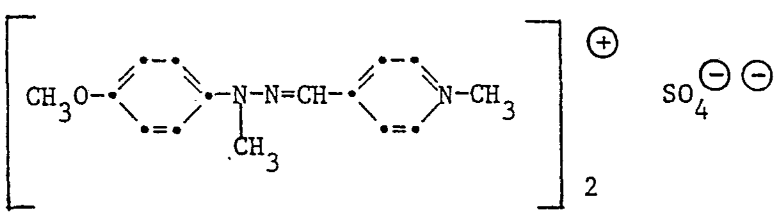

und verfährt im übrigen gleich wie im Beispiel angegeben, so erhält man ebenfalls durch Phasentrennung eine hochkonzentrierte Farbstofflösung, enthaltend ca. 50% des Farbstoffsalzes (vorwiegend als Carbonat, der Rest als Sulfat), 40–45% Wasser und 5–10% Salz (vorwiegend Natriumcarbonat).

c) Die unter (a) erhaltene Farbstoffphase wird gemäß Beispiel 1(d) mit Eisessig und Wasser bis zu einem gewünschten Endgewicht versetzt, um eine fertige, flüssige Formulierung (vorwiegend als Acetat) zu erhalten.

Beispiel 10

a) In einem Scheidetrichter mit Doppelmantel werden 550 ml (=ca. 550 g) der wäßrigen Farbstofflösung erhalten aus der Synthese (nach Beispiel 1(b), enthaltend ca. 71 g (=ca. 13%) des Farbstoffes der Formel

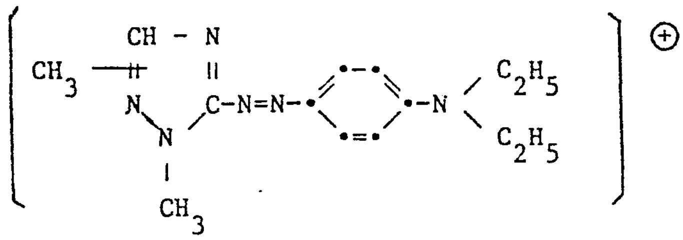

$CH_3SO_4^{\ominus}$

welche einen pH-Wert von ca. 1,5 bis 2,0 aufweist, indirekt mit heißem Wasser auf 80° C aufgeheizt und innerhalb 20 Minuten portionsweise mit 120 g wasserfreiem Natriumsulfat versetzt und während weiterer 30 Minuten gerührt. Anschließend wird das Gemisch während 1 bis 2 Stunden bis zur Phasentrennung stehen gelassen.

Als leichte Phase scheidet sich eine dunkle, konzentrierte Farbstofflösung ab. Die schwere wäßrige Phase enthält eine unwesentliche Menge Farbstoff. Diese Phase wird via Untenauslauf abgetrennt. Sie läßt sich gut mit wenig Hydrosulfit entfärben.

Die Farbstoffphase enthält ca. 38% des Farbstoffsalzes obiger Konstitution als Methylsulfatsalz und ca. 14% als Sulfatsalz, ca. 36% Wasser und ca. 12% anorganisches Salz (vorwiegend $Na_2SO_4$). Das bedeutet einen etwa 4mal so hohen Farbstoffgehalt wie in der eingesetzten aus der Synthese erhaltenen Farbstofflösung.

b) Die unter (a) erhaltene konzentrierte Farbstofflösung (135 g) wird mit 18,9 g Eisessig versetzt und auf Raumtemperatur gekühlt. Durch Zugabe von ca. 2,5 g Äthanolamin stellt man den pH-Wert auf 4,0 – 4,3 und anschließend mit ca. 33 g Wasser das Endgewicht der Lösung auf 189 g ein. Schließlich wird die Lösung mit 1 g Clarcel® versetzt und durch eine Nutsche geklärt. Man erhält eine direkt gebrauchsfertige, lagerstabile Farbstofflösung, die sich auch gut zur Herstellung von Premixes mit anderen kationischen Farbstoffen eignet.

## Beispiel 11

a) In einem Scheidetrichter mit Doppelmantel werden 600 g der wäßrigen Lösung, erhalten aus der Synthese, enthaltend ca. 55,5 g (= ca. 9,2%) des Farbstoffes der Formel

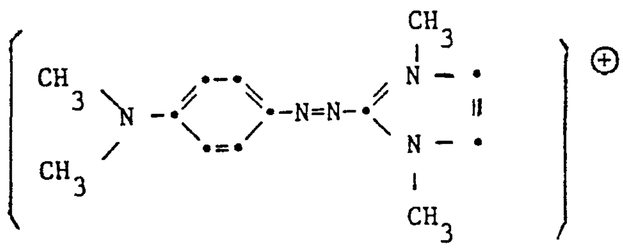

$CH_3SO_4^{\ominus}$

welche einen pH-Wert von 4,0 – 5,0 und eine Temperatur von 20° aufweist, mit 120 g wasserfreiem Natriumsulfat versetzt und während 30 Minuten gerührt.

Anschließend wird der Rührer entfernt und das Gemisch während 2 Stunden bei 20° C zur Phasentrennung stehen gelassen. Als leichte Phase scheidet sich eine dunkle, konzentrierte Farbstofflösung ab. Die schwere wäßrige Phase (550 ml) enthält eine unwesentliche Menge Farbstoff. Diese schwere Phase wird via Untenauslauf abgetrennt. Sie läßt sich gut mit wenig Hydrosulfit entfärben.

Die Farbstoffphase (ca. 95 g) enthält ca. 58% des obigen Farbstoffsalzes als Methylsulfat, ca. 36% Wasser und ca. 6% anorganisches Salz (vorwiegend $Na_2SO_4$). Das bedeutet einen mehr als 6mal so hohen Farbstoffgehalt wie in der eingesetzten aus der Synthese erhaltenen Farbstofflösung.

b) Die unter (a) erhaltene konzentrierte Farbstofflösung (95 g) wird mit warmem Wasser bis zum ursprünglichen Volumen von 600 ml verdünnt. Man stellt anschließend die Temperatur der Lösung auf 50 – 55° C und den pH-Wert auf 4,0 – 4,5 (evtl. Korrektur nach unten mit wenig konzentrierter Salzsäure). Diese Lösung wird nun mit 17,5 ml einer wäßrigen Lösung, enthaltend 13,6 g Zinkchlorid, und dann mit 60,0 g technischem Natriumchlorid versetzt. Anschließend wird die Suspension auf 15 – 20° C gekühlt und das abgeschiedene Farbsalz durch eine Nutsche filtriert. Das Nutschgut wird im Vakuum-Trockenschrank bei 70° C getrocknet. Man erhält 71 – 72 g des trockenen Rohfarbstoffes als Zinkchloriddoppelsalz, mit einer höheren Reinheit als das Zinksalz, daß man direkt aus der Syntheselösung erhalten kann.

c) Die unter (a) erhaltene konzentrierte Farbstofflösung (80 ml bzw. 95 g) wird mit Wasser und Eis auf ein Volumen von 400 ml gestellt, so daß die Temperatur 15° beträgt. Anschließend gibt man 100 g Kaliumchlorid portionsweise zu. Der Farbstoff fällt allmählich kristallin aus (Temperatur = 7° C). Der durch Filtration isolierte Farbstoff wird getrocknet und durch übliche Aufarbeitung (Mahlen und mit

Coupage Mischen) zu einem trockenen pulverförmigen Farbstoffpräparat, das frei von Zink ist, weiterverarbeitet.

Beispiel 12

a) In einem Scheidetrichter mit Doppelmantel werden 600 g der wäßrigen Lösung, erhalten aus der Synthese, enthaltend ca. 55,5 g (=ca. 9,2%) des Farbstoffes der Formel

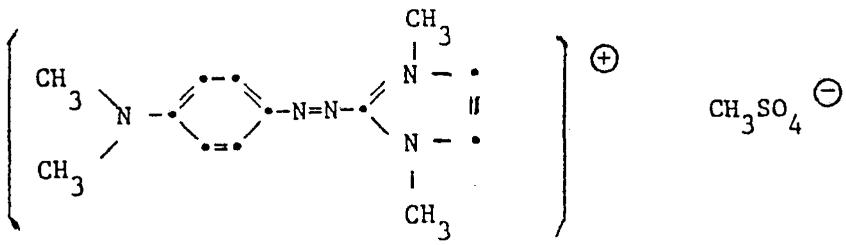

welche einen pH-Wert von 4,0–5,0 aufweist, indirekt mit heißem Wasser auf 80°C aufgeheizt, mit 138 g wasserfreiem Natriumsulfat versetzt und während 30 Minuten gerührt.

Anschließend wird der Rührer entfernt und das Gemisch während 2 Stunden bei 80°C zur Phasentrennung stehen gelassen. Als leichte Phase scheidet sich eine dunkle, konzentrierte Farbstofflösung ab. Die schwere wäßrige Phase (550 ml) enthält eine unwesentliche Menge Farbstoff. Diese schwere Phase wird via Untenauslauf abgetrennt. Sie läßt sich gut mit wenig Hydrosulfit entfärben.

Die Farbstoffphase (ca. 95 g) enthält ca. 58% des obigen Farbstoffsalzes als Methylsulfat, ca. 36% Wasser und ca. 6% anorganisches Salz (vorwiegend $Na_2SO_4$). Das bedeutet einen mehr als 6mal so hohen Farbstoffgehalt wie in der eingesetzten aus der Synthese erhaltenen Farbstofflösung.

b) Die unter (a) erhaltene konzentrierte Farbstofflösung (95 g) wird mit warmem Wasser bis zum ursprünglichen Volumen von 600 ml verdünnt. Man stellt anschließend die Temperatur der Lösung auf 50–55°C und den pH-Wert auf 4,0–4,5 (evtl. Korrektur nach unten mit wenig konzentrierter Salzsäure). Diese Lösung wird nun mit 17,5 ml einer wäßrigen Lösung, enthaltend 13,6 g Zinkchlorid, und dann mit 60,0 g technichem Natriumchlorid versetzt. Anschließend wird die Suspension auf 15–20°C gekühlt und das abgeschiedene Farbsalz durch eine Nutsche filtriert. Das Nutschgut wird im Vakuum-Trockenschrank bei 70°C getrocknet. Man erhält 71–72 g des trockenen Rohfarbstoffes als Zinkchloriddoppelsalz, mit einer höheren Reinheit als das Zinksalz, daß man direkt aus der Syntheselösung erhalten kann.

c) Die unter (a) erhaltene konzentrierte Farbstofflösung (80 ml bzw. 95 g) wird mit Wasser und Eis auf ein Volumen von 400 ml gestellt, so daß die Temperatur 15° beträgt. Anschließend gibt man 100 g Kaliumchlorid portionsweise zu. Der Farbstoff fällt allmählich kristallin aus (Temperatur=7°C). Der durch Filtration isolierte Farbstoff wird getrocknet und durch übliche Aufarbeitung (Mahlen und mit Coupage Mischen) zu einem trockenen pulverförmigen Farbstoffpräparat, das frei von Zink ist, weiterverarbeitet.

**Patentansprüche**

1. Verfahren zur Herstellung hochkonzentrierter, wäßriger Lösungen von kationischen Farbstoffen, dadurch gekennzeichnet, daß man eine verdünnte wäßrige Lösung bzw. Emulsion des kationischen Farbstoffes bei 10 bis 95°C, mit soviel eines Elektrolyts versetzt, daß sich ein 2-Phasensystem aus 2 Flüssigphasen bildet, und die abgeschiedene hochkonzentrierte wäßrige Farbstofflösung abtrennt.

2. Verfahren gemäß Anspruch 1, dadurch gekennzeichnet, daß man den kationischen Farbstoff in Form eines Salzes einer anorganischen oder organischen Säure verwendet.

3. Verfahren gemäß den Ansprüchen 1 und 2, dadurch gekennzeichnet, daß man als Elektrolyt Alkalihydroxide oder Alkali-, Erdalkali- oder Ammoniumsalze von anorganischen Säuren mit einer Löslichkeit in Wasser von mindestens 5 g/l bei 20°C verwendet.

4. Verfahren gemäß Anspruch 3, dadurch gekennzeichnet, daß man als Elektrolyt Kaliumchlorid, Natriumchlorid, Natriumcarbonat, Natriumhydroxid, Kaliumhydroxid oder vorzugsweise Natriumsulfat verwendet.

5. Verfahren gemäß den Ansprüchen 1 bis 4, dadurch gekennzeichnet, daß man als kationischen Farbstoff einen solchen verwendet, der mindestens ein quaternäres Stickstoffatom aufweist.

6. Verfahren gemäß den Ansprüchen 1 bis 5, dadurch gekennzeichnet, daß man die Phasentrennung bei einer Temperatur zwischen 30 und 70°C durchführt.

7. Verfahren gemäß den Ansprüchen 1 bis 6, dadurch gekennzeichnet, daß man die Phasentrennung bei einer Temperatur zwischen 40 und 60°C durchführt.

8. Hochkonzentrierte wäßrige Lösung eines Salzes eines kationischen Farbstoffes erhalten nach dem Verfahren gemäß Anspruch 1, enthaltend

(a) 30 bis 90 Gew.-% eines oder mehrere Salze eines kationischen Farbstoffes,
(b) 55 bis 8 Gew.-% Wasser und
(c) 1 bis 15 Gew.-% eines anorganischen Salzes bzw. einer anorganischen Base.

9. Hochkonzentrierte wäßrige Lösung eines Salzes eines kationischen Farbstoffes gemäß Anspruch 8, enthaltend

(a) 50 bis 80 Gew.-% eines oder mehrere Salze eines kationischen Farbstoffes,
(b) 45 bis 15 Gew.-% Wasser und
(c) 2 bis 8 Gew.-% eines anorganischen Salzes bzw. einer anorganischen Base.

10. Verwendung der gemäß Anspruch 1 erhaltenen hochkonzentrierten Lösungen zur Herstellung eines festen oder flüssigen Farbstoff-Präparates.

11. Verwendung gemäß Anspruch 10, dadurch gekennzeichnet, daß man die gemäß Anspruch 1 erhaltene Farbstofflösung trocknet.

12. Verwendung gemäß Anspruch 11, dadurch gekennzeichnet, daß man vor oder nach dem Trocknen ein oder mehrere Zusätze zugibt.

13. Verwendung gemäß Anspruch 12, dadurch gekennzeichnet, daß man als Zusätze Staubbindemittel, Stellmittel und/oder Dispergiermittel zugibt.

14. Verwendung gemäß Anspruch 10, dadurch gekennzeichnet, daß man die gemäß Anspruch 1 erhaltene konzentrierte Farbstofflösung zur Herstellung eines flüssigen Präparates weiterverarbeitet, wobei gegebenenfalls mit Wasser und/oder organischem Lösungsmittel auf die gewünschte Farbstärke verdünnt wird.

15. Verwendung gemäß Anspruch 14, dadurch gekennzeichnet, daß man die gemäß Anspruch 1 erhaltene konzentrierte Farbstofflösung mit einer organischen Säure und Wasser verdünnt und gegebenenfalls weitere Zusätze zugibt.

16. Verwendung gemäß den Ansprüchen 14 und 15, dadurch gekennzeichnet, daß man als organische Säure Essigsäure verwendet.

17. Verwendung gemäß den Ansprüchen 14 bis 16, dadurch gekennzeichnet, daß man dem flüssigen Präparat ein Alkanolamin bzw. Alkylamin zugibt.

18. Verwendung gemäß den Ansprüchen 14 bis 17, dadurch gekennzeichnet, daß man dem flüssigen Präparat einen Emulgator zugibt.

19. Die gemäß Anspruch 10 erhaltenen, festen oder flüssigen Farbstoff-Präparate.

## Claims

1. A process for producing a highly concentrated aqueous solution of a cationic dye, which process comprises adding to a dilute aqueous solution or emulsion of the cationic dye at 10 to 95°C an electrolyte in such an amount that a two-phase system consisting of two liquid phases is formed, and subsequently removing the highly concentrated aqueous dye solution which has separated.

2. A process according to Claim 1, wherein the cationic dye is used in the form of a salt of an inorganic or organic acid.

3. A process according to Claims 1 and 2, wherein there are used as electrolyte: alkali hydroxides or alkali metal salts, alkaline-earth metal salts or ammonium salts of inorganic acids having a solubility in water of et at least 5 g/l at 20° C.

4. A process according to Claim 3, wherein the electrolyte used is potassium chloride, sodium chloride, sodium carbonate, sodium hydroxide, potassium hydroxide or preferably sodium sulfate.

5. A process according to any one of Claims 1 to 4, wherein the cationic dye used is one which has at least one quaternary nitrogen atom.

6. A process according to any one of Claims 1 to 5, wherein the phase separation is performed at a temperature of between 30 and 70° C.

7. A process according to any one of Claims 1 to 6, wherein the phase separation is performed at a temperature of between 40 and 60° C.

8. A highly concentrated aqueous solution of a salt of a cationic dye, which solution is obtained by the process according to Claim 1 and contains:

(a) 30 to 90 per cent by weight of one or more salts of a cationic dye,
(b) 55 to 8 per cent by weight of water, and
(c) 1 to 15 per cent by weight of an inorganic salt or of an inorganic base.

9. A highly concentrated aqueous solution of a salt of a cationic dye, according to Claim 8, which solution contains:

(a) 50 to 80 per cent by weight of one or more salts of a cationic dye,
(b) 45 to 15 per cent by weight of water, and
(c) 2 to 8 per cent by weight of an inorganic salt or of an inorganic base.

10. Use of a highly concentrated solution according to Claim 1 for producing a solid or liquid dye preparation.
11. Use according to Claim 10, wherein the dye solution obtained according to Claim 1 is dried.
12. Use according to Claim 11, wherein one or more additives are added before or after drying.
13. Use according to Claim 12, wherein the additives used are dust-binding agents, extenders and/or dispersing agents.
14. Use according to Claim 10, wherein a concentrated dye solution obtained according to Claim 1 is further processed to produce a liquid preparation, optionally diluting to the colouring strength required with water and/or organic solvent.
15. Use according to Claim 14, wherein the concentrated dye solution obtained according to Claim 1 is diluted with an organic acid and water, and optionally further additives are added.
16. Use according to Claims 14 and 15, wherein the organic acid used is acetic acid.
17. Use according to any one of Claims 14 to 16, wherein an alkanolamine or alkylamine is added to the liquid preparation.
18. Use according to any one of Claims 14 to 17, wherein an emulsifier is added to the liquid preparation.
19. A solid or liquid dye preparation obtained according to Claim 10.

**Revendications**

1. Procédé pour préparer des solutions aqueuses de colorants cationiques hautement concentrées, caractérisé par le fait qu'on ajoute à une solution, ou à une émulsion, aqueuse diluée du colorant cationique, à 10° –95° C, une quantité d'électrolyte suffisante pour qu'il se forme un système à deux phases constitué par deux phases liquides, et qu'on sépare la solution de colorants aqueuse hautement concentrée, séparée.
2. Procédé selon la revendication 1, caractérisé par le fait qu'on utilise le colorant cationique sous forme d'un sel d'un acide minéral ou d'un acide organique.
3. Procédé selon les revendications 1 et 2, caractérisé par le fait qu'on utilise comme électrolyte, des hydroxydes alcalins ou des sels alcalins, des sels alcalino-terreux ou des sels d'ammonium d'acides minéraux ayant une solubilité dans l'eau d'au moins 5 g par litre à 20° C.
4. Procédé selon la revendication 3, caractérisé par le fait qu'on utilise comme électrolyte, le chlorure de potassium, le chlorure de sodium, le carbonate de sodium, l'hydroxyde de sodium, l'hydroxyde de potassium ou, de préférence, le sulfate de sodium.
5. Procédé selon les revendications 1 à 4, caractérisé par le fait qu'on utilise comme colorant cationique, un de ceux qui présentent au moins un atome d'azote quaternaire.
6. Procédé selon les revendications 1 à 5, caractérisé par le fait qu'on effectue la séparation de phases à une température comprise entre 30° et 70° C.
7. Procédé selon les revendications 1 à 6, caractérisé par le fait qu'on effectue la séparation de phases à une température comprise entre 40° et 60° C.
8. Solution aqueuse hautement concentrée d'un sel d'un colorant cationique, obtenue selon le procédé décrit dans la revendication 1, contenant:

(a) 30 à 90% en poids d'un ou de plusieurs sels d'un colorant cationique,
(b) 55 à 8% en poids, d'eau, et
(c) 1 à 15% en poids d'un sel minéral ou d'une base minérale.

9. Solution aqueuse hautement concentrée d'un sel d'un colorant cationique, selon la revendication 8, contenant:

(a) 50 à 80% en poids, d'un ou de plusieurs sel(s) d'un colorant cationique,
(b) 45 à 15% en poids, d'eau, et
(c) 2 à 8% en poids, d'un sel minéral ou d'une base minérale.

10. Utilisation des solutions hautement concentrées, obtenus selon la revendication 1, pour fabriquer une préparation de colorant solide ou liquide.
11. Utilisation selon la revendication 10, caractérisée par le fait qu'on sèche la solution de colorant obtenue selon la revendication 1.

12. Utilisation selon la revendication 11, caractérisée par le fait qu'on ajoute un ou plusieurs additif(s) avant ou après le séchage.

13. Utilisation selon la revendication 12, caractérisée par le fait qu'on ajoute comme additifs, des agents antipoussière, des produits régulateurs du colorant et/ou des agents dispersants.

14. Utilisation selon la revendication 10, caractérisée par le fait qu'on traite la solution de colorant concentrée, obtenue selon la revendication 1, pour fabriquer une préparation liquide, cette solution étant éventuellement diluée à l'intensité de couleur désirée avec de l'eau et/ou un solvant organique.

15. Utilisation selon la revendication 14, caractérisée par le fait qu'on dilue la solution de colorant concentrée, obtenue selon la revendication 1, avec un acide organique et de l'eau, et qu'on ajoute éventuellement d'autres additifs.

16. Utilisation selon les revendications 14 et 15, caractérisé par le fait qu'on utilise l'acide acétique comme acide organique.

17. Utilisation selon les revendications 14 à 16, caractérisée par le fait qu'on ajoute une alcanolamine ou une alkylamine à la préparation liquide.

18. Utilisation selon les revendications 14 à 17, caractérisée par le fait qu'on ajoute un émulsifiant à la préparation liquide.

19. Préparation de colorants solides ou liquides, obtenues selon la revendication 10.